# EUROPÄISCHE PATENTANMELDUNG

(11) **EP 1 637 436 A1**
(43) Veröffentlichungstag der Anmeldung: **22.03.2006**
(21) Anmeldenummer: 04405596.0
(22) Anmeldetag: 17.09.2004
(51) Int. Cl.: B62D 5/04, B62D 7/09, B62D 3/02, B62D 1/20

(54) **Fahrzeuglenkung**

(71) Anmelder: Zellweger, Lorenz, 3600 Thun (CH)
(72) Erfinder: Zellweger, Lorenz, 3600 Thun (CH)
(74) Vertreter: Roshardt, Werner Alfred

(57) **Zusammenfassung**

Eine Fahrzeuglenkung mit variablem Übersetzungsverhältnis für ein mit wenigstens einem lenkbaren Rad versehenes Fahrzeug hat ein Lenkgestänge, das wenigstens eine längliche Steuerstange (40) aufweist, die eine Steuerstangenlängsrichtung definiert, und eine längliche Arbeitsstange (70), die eine Arbeitsstangenlängsrichtung definiert. Die Fahrzeuglenkung hat weiter ein Überlagerungsgetriebe, das mit einem Stellantrieb versehenen ist. Das Überlagerungsgetriebe wirkt zwischen der Steuerstange (40) und der Arbeitsstange (70). Die Steuerstange (40) ist unter Einfluss einer Lenkspindel (20) und eines Lenkgetriebes (30) in Steuerstangenlängsrichtung verschiebbar. Die Arbeitsstange (70) ist unter Einfluss der Verschiebebewegung der Steuerstange (40) und einer dieser Verschiebebewegung mittels des Überlagerungsgetriebes überlagerten, von dessen Stellantrieb initiierten Relativverschiebebewegung zwischen der Steuerstange (40) und der Arbeitsstange (70) in Arbeitsstangenlängsrichtung verschiebbar. Die Verschiebebewegung der Arbeitsstange (70) wird über eine Partie des Lenkgestänges an das lenkbare Rad übertragen, um dieses zu lenken. Die Arbeitsstange (70) ist in einem Abstand quer zur Steuerstangenlängsrichtung von der Steuerstange (40) versetzt angeordnet.

## Beschreibung

### Technisches Gebiet

Die vorliegende Erfindung betrifft eine Fahrzeuglenkung mit variablem Übersetzungsverhältnis.

### Stand der Technik

Bei konventionellen Fahrzeuglenkungen werden die vom Fahrer an einer Lenkhandhabe (z.B. einem Lenkrad oder einer Lenkstange) initiierten Lenkbewegungen über eine Lenkspindel, ein Lenkgetriebe und ein Lenkgestänge an die lenkbaren Fahrzeugräder weitergeleitet. Dabei wird durch die Fahrzeuglenkung insgesamt eine Drehbewegung der Lenkhandhabe um einen Drehwinkel dα in eine Schwenkbewegung der gelenkten Räder um einen Schwenkwinkel dβ umgesetzt. Das Übersetzungsverhältnis der Lenkung (d.h. das Übersetzungsverhältnis zwischen der Drehbewegung des Lenkrades und der Schwenkbewegung der gelenkten Räder) wird im Falle von konventionellen Fahrzeuglenkungen üblicherweise als konstant angesehen, obwohl genau genommen auch hier bereits bei grossen Schwenkwinkeln eine geringfügige Änderung des Übersetzungsverhältnisses eintritt, die durch die Geometrie des Lenkgestänges bedingt ist. Trotz dieser geringfügigen Nicht-Linearitäten wird im Falle von konventionellen Fahrzeuglenkungen von einer linearen Beziehung zwischen dem Drehwinkel dα der Lenkhandhabe und dem Schwenkwinkel dβ der gelenkten Räder gesprochen.

Daneben sind sogenannte Fahrzeuglenkungen mit einem variablen Übersetzungsverhältnis bekannt, bei denen zur Verbesserung der Manövrierfähigkeit bei kleinen Fahrgeschwindigkeiten und/oder der Geradeauslaufeigenschaften bei hohen Fahrgeschwindigkeiten ein gezielt variables Übersetzungsverhältnis zwischen dem Drehwinkel dα der Lenkhandhabe und dem Schwenkwinkel dβ der gelenkten Räder verwirklicht ist.

In der EP 0 915 003 A1 (Wandfluh AG) ist eine Fahrzeuglenkung mit variablem Übersetzungsverhältnis beschrieben, die mit einem mechanischen Lenkgetriebe versehen ist, das eine hochgradige Nichtlinearität zwischen den Bewegungen am Getriebeeingang und den Bewegungen am Getriebeausgang aufweist. Bei dieser Lenkung ist zwar aufgrund des speziellen Lenkgetriebes ein variables Übersetzungsverhältnis mit einer vergleichsweise grossen Differenz zwischen dem maximalen und dem minimalen Übersetzungsverhältnis verwirklicht. Da aber - analog zu konventionellen Lenkungen mit konstantem Übersetzungsverhältnis - nach wie vor eine Zwangskopplung zwischen der Lenkhandhabe und den gelenkten Rädern besteht, sind die Variationsmöglichkeiten zur Beeinflussung des Übersetzungsverhältnisses beschränkt.

Grössere Variationsmöglichkeiten zur Beeinflussung des Übersetzungsverhältnisses gewähren Lenkungen des Typs, bei dem den durch den Fahrer initiierten Lenkbewegungen weitere Lenkbewegungen überlagert werden, die von einem mit einem Stellantrieb versehenen Überlagerungsgetriebe initiiert werden. Dabei wird jeweils der durch den Fahrer initiierten Lenkbewegung einer Lenkungskomponente mittels des Überlagerungsgetriebes eine weitere Lenkbewegung überlagert, die nicht direkt durch den Fahrer initiiert ist.

In den Druckschriften DE 197 50 585 A1 (Deutsches Zentrum für Luft- und Raumfahrt) und DE 196 01 826 A1 (Bosch) sind Lenkungen dieses Typs mit einem Überlagerungsgetriebe beschrieben, wobei jeweils einer durch den Fahrer initiierten Drehbewegung einer Achse oder Welle der Lenkung mittels des elektromotorisch angetriebenen Stellantriebs des Überlagerungsgetriebes eine weitere Drehbewegung überlagert wird. Dabei kann das Überlagerungsgetriebe zwischen der Lenkhandhabe und dem Lenkgetriebe, im Bereich des Lenkgetriebes oder zwischen dem Lenkgetriebe und den gelenkten Rädern angeordnet sein.

Die zur Überlagerung von zwei Drehbewegungen ausgebildeten Überlagerungsgetriebe verursachen erhebliche Reibungsverluste und vermitteln dem Fahrer ein ungewohntes Lenkungsgefühl. Deshalb wird in der Druckschrift DE 102 16 130 A1 (BMW) eine Fahrzeuglenkung mit variablem Übersetzungsverhältnis vorgeschlagen, welche auf beiden Seiten des Lenkgetriebes einer Zahnstangen-Lenkung jeweils zwischen dem Lenkgetriebe und den beiden gelenkten Rädern je ein Überlagerungsgetriebe aufweist. Die beiden Überlagerungsgetriebe koppeln die Zahnstange im Bereich ihrer beiden Längsenden je mit einer koaxial zur Zahnstange angeordneten Spurstange, wobei jedes der beiden Überlagerungsgetriebe der durch die Lenkspindel und das Zahnstangegetriebe verursachten Zahnstangen-Schiebebewegung in Stangenlängsrichtung je eine weitere Schiebebewegung in Stangenlängsrichtung überlagert. Die in der Druckschrift DE 102 16 130 A1 (BMW) beschriebenen Überlagerungsgetriebe zur Überlagerung von zwei Schiebebewegungen vermitteln dem Fahrer zwar ein besseres Lenkungsgefühl als die Überlagerungsgetriebe zur Überlagerung von Drehbewegungen. Sie sind aber konstruktiv aufwändig und problematisch hinsichtlich des Bauraum-Bedarfs im Bereich der Zahnstange.

Noch grössere Variationsmöglichkeiten zur Beeinflussung des Übersetzungsverhältnisses gewähren Lenkungen, die nach dem sogenannten "steering-by-wire" Prinzip funktionieren. Bei diesen Lenkungen wird von einem Mikroprozessor aus einer Vielzahl von relevanten Parametern ein Schwenkwinkel berechnet, welcher dann von geeigneten Stellgliedern an die gelenkten Räder übertragen wird. In der Druckschrift DE 195 46 94 C1 (Mercedes-Benz) wird eine Fahrzeuglenkung mit einem Übersetzungsverhältnis beschrieben, welches entsprechend einem Kennfeld zumindest in Abhängigkeit eines Drehwinkels dα der Lenkhandhabe und der Fahrgeschwindigkeit veränderbar ist.

### Darstellung der Erfindung

Aufgabe der Erfindung ist es, für eine dem eingangs genannten technischen Gebiet zugehörende Fahrzeuglenkung mit variablem Übersetzungsverhältnis ein neues Konzept aufzuzeigen.

Die Lösung der Aufgabe ist durch die Merkmale der unabhängigen Ansprüche definiert. Gemäss der Erfindung hat eine Fahrzeuglenkung mit variablem Übersetzungsverhältnis für ein mit wenigstens einem lenkbaren Rad versehenes Fahrzeug ein Lenkgestänge. Das Lenkgestänge weist wenigstens eine längliche Steuerstange auf, die eine Steuerstangenlängsrichtung definiert, und eine längliche Arbeitsstange, die eine Arbeitsstangenlängsrichtung definiert. Die Fahrzeuglenkung hat weiter ein Überlagerungsgetriebe, das mit einem Stellantrieb versehen ist. Das Überlagerungsgetriebe wirkt zwischen der Steuerstange und der Arbeitsstange. Die Steuerstange ist unter Einfluss einer Lenkspindel und eines Lenkgetriebes der Fahrzeuglenkung in Steuerstangenlängsrichtung (d.h. längs zur Längsrichtung der Steuerstange) bezüglich des Fahrzeugs verschiebbar. Die Arbeitsstange ist unter Einfluss der Verschiebebewegung der Steuerstange und einer dieser Verschiebebewegung mittels des Überlagerungsgetriebes überlagerten, von dessen Stellantrieb initiierten Relativverschiebebewegung zwischen der Steuerstange und der Arbeitsstange in Arbeitsstangenlängsrichtung (d.h. längs zur Längsrichtung der Arbeitsstange) verschiebbar. Die Verschiebebewegung der Arbeitsstange wird über eine Partie des Lenkgestänges an das lenkbare Rad übertragen, um dieses zu lenken. Die Arbeitsstange ist in einem Abstand quer zur Steuerstangenlängsrichtung von der Steuerstange versetzt angeordnet.

Als Stellantrieb für die erfindungsgemässe Fahrzeuglenkung kann irgend ein für geradlinige Stellbewegungen geeigneter Stellantrieb verwendet werden, so z.B. eine hydraulische Kolben-Zylinder-Anordnung, ein elektromotorisch angetriebener Spindel-Mutter-Trieb (insbesondere ein Spindel-Mutter-Trieb auf der Basis einer Kugelumlaufspindel), ein Zahnstangentrieb, ein Linearmotor o.ä.

Die Steuerstange kann z.B. eine mit einem Lenkgetriebe der Fahrzeuglenkung verbundene Stange sein, insbesondere die Zahnstange eines Zahnstangen-Lenkgetriebes oder eine mit dieser fest verbundenen Stange. Die Arbeitsstange kann z.B. eine Spurstange sein oder eine mit dieser fest verbundenen Stange.

Indem die Arbeitsstange quer zur Längsrichtung der Steuerstange versetzt (respektive quer zur Steuerstange oder deren Verlängerung versetzt) angeordnet ist, wird im Bereich der Steuerstange weniger Bauraum benötigt. Dieser Bauraum kann dann für andere Komponente der Fahrzeuglenkung und/oder des Fahrzeugs verwendet werden. Im Vergleich zu Fahrzeuglenkungen, bei denen die Steuerstange und die Arbeitsstange unmittelbar beieinander oder sogar koaxial zueinander benachbart angeordnet werden müssen, gewährt die erfindungsgemässe Lösung eine grössere Freiheit zur Realisierung von verschiedenen konstruktiven Lösungen im Bereich der Steuerstange. Darüber hinaus wird durch die quer zueinander versetzte Anordnung eine wenigstens teilweise Entkopplung der Steuerstange von der Arbeitsstange erreicht. Es werden dann nicht mehr sämtliche Momente und Vibrationen, die vom lenkbaren bzw. gelenkten Fahrzeugrad auf die Arbeitsstange übertragen werden, von dieser weiter auf die Steuerstange übertragen. Dies eröffnet die Möglichkeit, die Steuerstange weniger massiv zu konstruieren als im Falle einer unmittelbar bei der Steuerstange angeordnete und direkt mit dieser gekoppelten Arbeitsstange.

Vorteilhafterweise sind die Steuerstange und die Arbeitsstange parallel zueinander (und zueinander quer zu ihrer Längsrichtung versetzt) angeordnet. Dadurch wird die Konstruktion der erfindungsgemässen Fahrzeuglenkung vereinfacht. Grundsätzlich ist es aber auch möglich, die Steuerstange und die Arbeitsstange nicht parallel zueinander anzuordnen.

Weiter ist das Überlagerungsgetriebe vorzugsweise derart ausgebildet und angeordnet, dass im Falle eines Ausfalls des Stellantriebs dieser blockiert ist und dann die Steuerstange über das Überlagerungsgetriebe unverschiebbar mit der Arbeitsstange verbunden ist. Dadurch wird die Sicherheit der erfindungsgemässen Fahrzeuglenkung im Störungsfall verbessert.

Eine bevorzugte Ausführungsart der Erfindung zeichnet sich dadurch aus, dass das Überlagerungsgetriebe ein Basisteil (z.B. ein Gehäuse, eine Basisplatte o.ä) hat, welches entweder bezüglich der Steuerstange oder bezüglich der Arbeitsstange in Stangelängsrichtung bezüglich dieser Stange unverschieblich verbunden ist. D.h., dass das Basisteil mit einer ersten Stange eines aus der Steuerstange und der Arbeitsstange gebildeten Stangenpaares in Längsrichtung unverschieblich bzw. fest mit dieser ersten Stange verbunden ist, während mittels des Stellantriebs zwischen dem Basisteil und der anderen Stange (d.h. der zweiten Stange des aus der Steuerstange und der Arbeitsstange gebildeten Stangenpaares) eine geradlinige Relativverschiebbewegung in Längsrichtung der zweiten Stange erzeugbar ist.

Vorzugsweise weist bei dieser Ausführungsart der Erfindung der Stellantrieb einen Spindel-Mutter-Trieb auf mit einer länglichen Gewindespindel, die eine Spindelachse definiert, und einer mit der Gewindespindel zusammenwirkenden Mutter. Die Mutter ist bezüglich dem Basisteil um eine mit der Spindelachse zusammenfallende Drehachse herum drehbar und in Richtung der Spindelachse bezüglich dem Basisteil unverschiebbar am Basisteil gelagert, wobei die Mutter von einem Drehantrieb zur Drehung um ihre Drehachse herum antreibbar ist. Wenn sich die Mutter um Ihre Drehachse herum dreht, wird die mit ihr nach Art eines Spindel-Mutter-Triebs zusammenwirkende Gewindespindel in Spindellängsrichtung bezüglich der Mutter und somit bezüglich dem Basisteil verschoben. Die Gewindespindel kann fest und unverschiebbar mit der zweiten Stange des aus der Steuerstange und der Arbeitsstange gebildeten Stangenpaares verbunden sein, so dass mittels des Spindel-Mutter-Triebs diese zweite Stange bezüglich des Basisteils und somit bezüglich der ersten Stange geradlinig verschiebbar ist. Insbesondere kann die Gewindespindel sogar als integraler Bestandteil der zweiten Stange ausgebildet sein.

Als Alternative zu einer drehbar am Basisteil gelagerten Mutter und einer fest mit der zweiten Stange verbundenen Gewindespindel kann aber auch die Gewindespindel des Spindel-Mutter-Triebs drehbar und in Spindellängsrichtung unverschiebbar am Basisteil gelagert und die Mutter des Spindel-Mutter-Triebs fest mit der zweiten Stange verbunden sein.

Vorzugsweise umfasst der Drehantrieb einen von der Mutter distanzierten Antriebsmotor und ein Drehantriebsgetriebe, wobei der Antriebsmotor über das Drehantriebsgetriebe mit der Mutter gekoppelt ist, um diese zur Drehung um ihre Drehachse herum anzutreiben. Der Antriebsmotor kann am Basisteil angebracht sein oder an irgend einer anderen Partie der Fahrzeuglenkung oder des Fahrzeugs. Das Drehantriebsgetriebe kann z.B. einen Zahnriemen umfassen, welcher vom Antriebsmotor angetrieben wird und die Mutter zur Drehung um ihre Drehachse herum antreibt. Als Alternative zu einem Zahnriemenantrieb kann das Drehantriebsgetriebe aber auch ein Zahnradgetriebe, ein Kettengetriebe oder irgend ein anderes Antriebsgetriebe umfassen, das geeignet ist, um die Mutter des Spindel-Mutter-Triebs zur Drehung um ihre Drehachse herum anzutreiben.

Bei einer vorteilhaften Variante einer erfindungsgemässen Fahrzeuglenkung, die einen mit einem Spindel-Mutter-Trieb versehenen Stellantrieb aufweist, kann das Lenkgetriebe weiter mit einer Zahnstange versehen sein. Dabei kann es sich beim Lenkgetriebe um ein Lenkgetriebe handeln, wie es für konventionelle Zahnstangenlenkungen gebräuchlich ist. Die Gewindespindel kann dann fest mit der Zahnstange verbunden sein. Insbesondere kann die Gewindespindel sogar als integraler Bestandteil der Zahnstange ausgebildet sein. Dadurch wird insgesamt eine besonders einfache und kostengünstige Konstruktion der Fahrzeuglenkung erreicht.

Die Zahnstange des Lenkgetriebes kann eine regelmässige Zahnung aufweisen, um ein Lenkgetriebe mit einem konstanten Übersetzungsverhältnis zu bilden. Als Alternative dazu kann aber auch eine Zahnstange verwendet werden, deren Verzahnung mit unterschiedlichem Modul und Eingriffswinkel gefertigt ist, um ein Lenkgetriebe mit einem variablen Übersetzungsverhältnis zu bilden.

Gemäss einer weiteren vorteilhaften Variante einer erfindungsgemässen Fahrzeuglenkung, die einen mit einem Spindel-Mutter-Trieb versehenen Stellantrieb mit einem von der Mutter distanzierten Antriebsmotor aufweist, ist die erste Stange des aus der Steuerstange und der Arbeitsstange gebildeten Stangenpaares die Arbeitsstange. D.h., das Basisteil ist mit der Arbeitsstange in Richtung deren Längsachse unverschiebbar verbunden. Vorzugsweise ist in diesem Fall der Antriebsmotor ein Elektromotor, der an der Arbeitsstange oder in einem Hohlraum der Arbeitsstange angeordnet ist. Durch die Anordnung des Antriebsmotors an der Arbeitsstange kann eine besonders einfache und raumsparende Konstruktion des Stellantriebs erreicht werden.

Gemäss einem weiteren vorteilhaften Aspekt der Erfindung hat eine Fahrzeuglenkung für ein mit wenigstens einem lenkbaren Rad versehenes Fahrzeug eine von einem Fahrer betätigbare Lenkhandhabe, z.B. ein Lenkrad oder eine Lenkstange, welche mit dem lenkbaren Rad gekoppelt ist, um dieses zu lenken. Dabei liegt zwischen einem an der Lenkhandhabe vom Fahrer ausgeübten Drehwinkel und einem dadurch über die Fahrzeuglenkung bewirkten Schwenkwinkel des lenkbaren Rads ein Übersetzungsverhältnis vor, welches entsprechend einem Kennfeld zumindest in Abhängigkeit von der Auslenkung der Lenkhandhabe aus einer Geradeausstellung der Lenkhandhabe und in Abhängigkeit von der Fahrgeschwindigkeit des Fahrzeugs veränderbar ist. Das Übersetzungsverhältnis bleibt jedoch im Wesentlichen konstant, wenn sowohl die Fahrgeschwindigkeit in einem mittleren Geschwindigkeitsbereich als auch die Auslenkung der Lenkhandhabe aus ihrer Geradeausstellung in einem begrenzten Bereich um die Geradeausstellung herum liegt, d.h., wenn sowohl die Fahrgeschwindigkeit zwischen einer unteren Grenzgeschwindigkeit und einer oberen Grenzgeschwindigkeit liegt als auch die Auslenkung der Lenkhandhabe aus ihrer Geradeausstellung kleiner ist als ein Grenzauslenkungswinkel.

Unter einem Übersetzungsverhältnis, das in einem Geschwindigkeitsbereich und/oder einem Auslenkungswinkelbereich im Wesentlichen konstant ist, wird im vorliegenden Zusammenhang ein Übersetzungsverhältnis verstanden, dessen Grösse sich im angegebenen Geschwindigkeits- und Lenkungswinkelbereich nicht stärker verändert als die Grösse des Übersetzungsverhältnisses einer konventionellen Fahrzeuglenkung (d.h. einer Fahrzeuglenkung ohne variablem Übersetzungsverhältnis, wie z.B. einer Zahnstangenlenkung mit regelmässiger Zahnung) im selben Auslenkungswinkelbereich. In diesem Sinne werden Änderungen des Übersetzungsverhältnisses von einigen wenigen Prozent im gesamten in der Praxis bei einer bestimmten Fahrgeschwindigkeit nutzbaren Auslenkungswinkelbereich noch als konstantes Übersetzungsverhältnis betrachtet.

Mit anderen Worten ausgedrückt, bedeutet das, dass gemäss diesem Aspekt der Erfindung in sämtlichen Fällen, in denen sowohl die Fahrgeschwindigkeit in einem mittleren Geschwindigkeitsbereich zwischen der unteren Grenzgeschwindigkeit und der oberen Grenzgeschwindigkeit liegt als auch die Auslenkung der Lenkhandhabe aus ihrer Geradeausstellung in einem auf beiden Seiten der Geradeausstellung durch den Grenzauslenkungswinkel begrenzten mittleren Winkelbereich liegt, das Übersetzungsverhältnis im Wesentlichen konstant bleibt. Durch das im Wesentlichen konstante Übersetzungsverhältnis in einem mittleren Geschwindigkeits- und Auslenkungswinkelbereich wird erreicht, dass der Fahrer in diesem Parameterbereich nicht von unerwarteten Wirkungen der Fahrzeuglenkung überrascht wird. Dadurch wird die Sicherheit beim Fahren in dem am meisten benutzten Geschwindigkeits- und Auslenkungswinkelbereich verbessert. Es leuchtet ein, dass dieser Aspekt der Erfindung sich auch als vorteilhaft erweist für Fahrzeuglenkungen mit variablem Übersetzungsverhältnis, die nicht mit einem Überlagerungsgetriebe versehen sind, welches zwischen einer Steuerstange und einer quer zu dieser versetzt angeordneten Arbeitsstange wirkt.

Die untere Grenzgeschwindigkeit kann im Bereich zwischen ungefähr 20 und 50 km/h, insbesondere bei ungefähr 30 km/h liegen. Unterhalb dieser Grenzgeschwindigkeit werden mit einem Kraftfahrzeug typischerweise Fahrmanöver wie z.B. das Einparkieren des Fahrzeugs auf einen Parkplatz durchgeführt. Für solche Fahrmanöver ist eine Fahrzeuglenkung mit einer stark progressiven Lenkungscharakteristik von Vorteil, d.h. eine Lenkung, die mit zunehmender Auslenkung der Lenkhandhabe aus ihrer Geradeausstellung zunehmend direkter wird. Mit anderen Worten heisst das, dass das Übersetzungsverhältnis einer solchen Lenkung bei grossen Auslenkungswinkeln der Lenkhandhabe wesentlich grösser ist als im Bereich der Geradeausstellung der Lenkhandhabe.

Für die obere Grenzgeschwindigkeit hat sich ein Wert zwischen ungefähr 80 und 150 km/h als vorteilhaft erwiesen, insbesondere ein Wert von ungefähr 130 km/h. Die obere Grenzgeschwindigkeit kann insbesondere der maximal zulässigen Höchstgeschwindigkeit in einem bestimmten Land entsprechen. Dadurch wird gewährleistet, dass der Bereich mit im Wesentlichen konstantem Übersetzungsverhältnis nach oben erst bei Geschwindigkeiten verlassen wird, wie sie typischerweise lediglich auf vom öffentlichen Verkehr getrennten Rennstrecken gefahren werden.

Vorzugsweise ist die Fahrzeuglenkung weiter derart konstruiert, dass ausserhalb des oben erwähnten mittleren Parameterbereichs Änderungen des Übersetzungsverhältnisses in Abhängigkeit der Fahrgeschwindigkeit und/oder der Auslenkung der Lenkhandhabe stetig erfolgen. Dadurch werden abrupte Änderungen des Übersetzungsverhältnisses vermieden. Andernfalls könnten solche abrupte Änderungen den Fahrer überraschen und zu unerwünschten und mitunter gefährlichen Lenkungsmanövern verleiten.

Gemäss einer bevorzugten Ausführungsart der Erfindung weist eine Fahrzeuglenkung mit variablem Übersetzungsverhältnis, das in einem mittleren Geschwindigkeits- und Auslenkungsbereich jedoch konstant ist, ein mit einem Stellantrieb versehenes Überlagerungsgetriebe auf, das zwischen einer Steuerkomponente und einer Arbeitskomponente der Lenkung wirkt. Dabei ist die Steuerkomponente unter Einfluss der Lenkhandhabe bewegbar und die Arbeitskomponente ist unter Einfluss der Bewegung der Steuerkomponente und einer dieser Bewegungen mittels des Überlagerungsgetriebes überlagerten, von dessen Stellantrieb initiierten Relativbewegung zwischen der Steuerkomponente und der Arbeitskomponente bewegbar, wobei die Bewegung der Arbeitskomponente an das lenkbare Rad übertragen wird, um dieses zu lenken. Das im Wesentlichen konstante Übersetzungsverhältnis im mittleren Geschwindigkeits- und Auslenkungsbereich wird dadurch verwirklicht, dass dann, wenn sowohl die Fahrgeschwindigkeit zwischen der unteren Grenzgeschwindigkeit und der oberen Grenzgeschwindigkeit liegt als auch die Auslenkung der Lenkhandhabe aus ihrer Geradeausstellung kleiner ist als der Grenzauslenkungswinkel, der Stellantrieb blockiert ist. Die Blockierung des Stellantriebs bewirkt, dass keine vom Stellantrieb initiierten Relativbewegungen zwischen der Steuerkomponente und der Arbeitskomponente stattfinden.

Grundsätzlich kann aber eine Fahrzeuglenkung mit variablem Übersetzungsverhältnis, das in einem mittleren Geschwindigkeits- und Auslenkungsbereich jedoch konstant ist, auch durch andere Konstruktionen von Fahrzeuglenkungen verwirklicht werden.

Vorteilhafterweise ist für Fahrgeschwindigkeiten (insbesondere sogar sämtliche Fahrgeschwindigkeiten), die kleiner sind als die untere Grenzgeschwindigkeit, die Variabilität des Übersetzungsverhältnisses in Abhängigkeit der Auslenkung der Lenkhandhabe grösser als für Fahrgeschwindigkeiten (insbesondere sogar sämtliche Fahrgeschwindigkeiten), die grösser sind als die untere Grenzgeschwindigkeit. Das heisst, dass dann in einem Bereich mit kleinen Fahrgeschwindigkeiten (mitunter auch als Manövrierbereich bezeichnet) eine vergleichsweise grosse auslenkungswinkelabhängige Variabilität des Übersetzungsverhältnisses vorliegt. So kann z.B. in diesem Geschwindigkeitsbereich das Übersetzungsverhältnis in der Geradeausstellung der Lenkhandhabe einen Wert zwischen ungefähr 1:13 und 1:19, insbesondere einen Wert von ungefähr 1:16 aufweisen, wobei mit zunehmender Auslenkung der Lenkhandhabe das Übersetzungsverhältnis zunimmt und bei maximaler Auslenkung einen Wert zwischen ungefähr 1:12 und 1:6, insbesondere einen Wert von ungefähr 1:8 erreichen kann. Vorzugsweise nimmt in diesem Geschwindigkeitsbereich (d.h. im Manövrierbereich) auch die auslenkungsabhängige Variabilität des Übersetzungsverhältnisses zu mit abnehmender Fahrgeschwindigkeit, wobei jedoch vorteilhafterweise im gesamten Manövrierbereich die auslenkungsabhängige Variabilität grösser ist als die fahrgeschwindigkeitsabhängige Variabilität. Es kann aber auch vorgesehen sein, dass im gesamten Manövrierbereich eine im Wesentlichen lediglich auslenkungsabhängige Variabilität vorliegt, während die Variabilität in Abhängigkeit von der Fahrgeschwindigkeit in diesem Geschwindigkeitsbereich vernachlässigbar klein oder nicht vorhanden ist.

Weiter ist vorteilhafterweise für Fahrgeschwindigkeiten (insbesondere sogar sämtliche Fahrgeschwindigkeiten), die grösser sind als die obere Grenzgeschwindigkeit, die Variabilität des Übersetzungsverhältnisses in Abhängigkeit der Fahrgeschwindigkeit grösser als für Fahrgeschwindigkeiten (insbesondere sogar sämtliche Fahrgeschwindigkeiten), die kleiner sind als die obere Grenzgeschwindigkeit. Das heisst, dass dann in einem Bereich mit grossen Fahrgeschwindigkeiten (mitunter auch als Hochgeschwindigkeitsbereich bezeichnet) eine vergleichsweise grosse fahrgeschwindigkeitsabhängige Variabilität des Übersetzungsverhältnisses vorliegt. So kann z.B. in diesem Geschwindigkeitsbereich das Übersetzungsverhältnis in der Geradeausstellung der Lenkhandhabe im Bereich der oberen Grenzgeschwindigkeit einen Wert zwischen ungefähr 1:13 und 1:19, insbesondere einen Wert von ungefähr 1:16 aufweisen, wobei mit zunehmender Fahrgeschwindigkeit das Übersetzungsverhältnis in der Geradeausstellung zunimmt und bei maximaler Fahrgeschwindigkeit einen Wert zwischen ungefähr 1:20 und 1:30, insbesondere einen Wert von ungefähr 1:25 erreichen kann. Vorzugsweise nimmt in diesem Geschwindigkeitsbereich die geschwindigkeitsabhängige Variabilität des Übersetzungsverhältnisses zu mit zunehmender Fahrgeschwindigkeit. Vorzugsweise ist im Hochgeschwindigkeitsbereich die geschwindigkeitsabhängige Variabilität auch grösser als die auslenkungsabhängige Variabilität im gesamten bei diesen Fahrgeschwindigkeiten überhaupt nutzbaren Auslenkungsbereich. Es kann aber auch vorgesehen sein, dass im Hochgeschwindigkeitsbereich lediglich eine geschwindigkeitsabhängige Variabilität des Übersetzungsverhältnisses vorliegt, während die Variabilität in Abhängigkeit der Auslenkung der Lenkhandhabe vernachlässigbar klein oder nicht vorhanden ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine vereinfachte schematische Darstellung einer Fahrzeuglenkung gemäss einer ersten bevorzugten Ausführungsart der Erfindung;
- Fig. 2: eine Zahnstange der Fahrzeuglenkung aus Fig. 1 in einer vereinfachten Detailansicht;
- Fig.3: eine vereinfachte schematische Detailansicht einer Fahrzeuglenkung gemäss einer zweiten bevorzugten Ausführungsart der Erfindung;
- Fig. 4: eine Partie einer Fahrzeuglenkung gemäss einer dritten bevorzugten Ausführungsart der Erfindung in einer vereinfachten Detailansicht;
- Fig. 5: eine Partie einer Fahrzeuglenkung gemäss einer vierten bevorzugten Ausführungsart der Erfindung in einer vereinfachten Detailansicht.

Grundsätzlich sind in den Figuren gleiche Teile mit gleichen Bezugszeichen versehen.

### Wege zur Ausführung der Erfindung

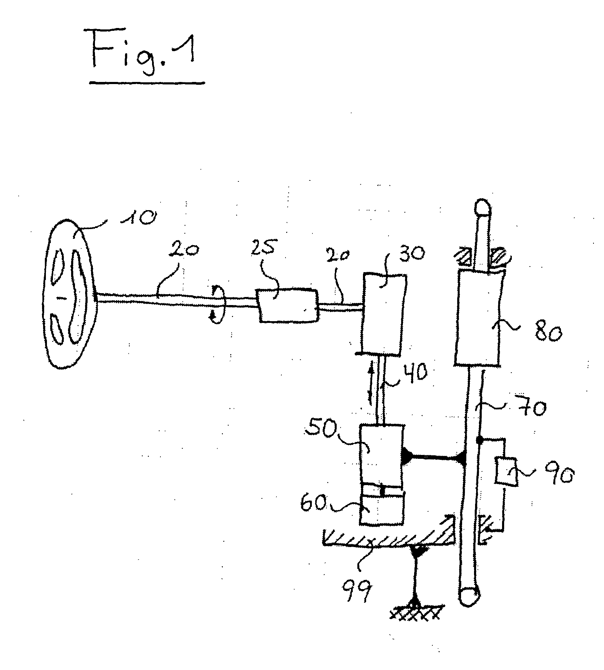

Die in Fig. 1 dargestellte Fahrzeuglenkung hat ein Lenkrad 10, das fest mit einer Lenkspindel 20 verbunden ist. Lenkbewegungen, die von einem Fahrer am Lenkrad 10 ausgeübt werden, werden über die Lenkspindel 20 und über ein Lenkgetriebe 30 auf eine Stange 40 übertragen, die nachfolgend als Steuerstange 40 bezeichnet wird.

Die Steuerstange 40 hat eine mit einer Zahnung versehene erste Stangenpartie 41, in welcher sie als Zahnstange 40 wirkt. Das Lenkgetriebe 30 ist ein Zahnstangenlenkgetriebe. Die von der Lenkspindel 20 in das Lenkgetriebe 30 eingespeisten rotatorischen Lenkbewegungen werden vom Lenkgetriebe 30 in translatorische Schiebebewegungen der Steuerstange 40 übertragen. Durch diese Schiebebewegungen wird die Steuerstange 40 in Richtung der Steuerstangenlängsrichtung bezüglich dem Fahrzeug 99 verschoben.

Anschliessend an die erste Stangenpartie 41 hat die Steuerstange 40 eine zweite Stangenpartie 42 mit im Wesentlichen glatter Oberfläche. An die zweite Stangenpartie 42 (auch als Verbindungspartie 42 bezeichnet) schliesst eine dritte Stangenpartie 43 an, die mit einem Aussengewinde versehen ist. In ihrer dritten Stangenpartie 43 ist die Steuerstange 40 als Gewindespindel 40 ausgebildet, die nach Art eines Spindel-Mutter-Triebs mit einer Umlaufmutter 52 zusammenwirkt.

Die Umlaufmutter 52 ist in einem Getriebegehäuse 50 eines Überlagerungsgetriebes bezüglich dem Getriebegehäuse 50 um eine Drehachse herum drehbar und in Richtung der Drehachse bezüglich dem Getriebegehäuse 50 unverschiebbar gelagert. Die dritte Stangenpartie 43 greift mit ihrem Aussengewinde in ein diesem entsprechendes Innengewinde der Umlaufmutter 52 ein, so dass die Umlaufmutter 52 und die Steuerstange 40 nach Art eines Spindel-Mutter-Triebs zusammenwirken. Am Getriebegehäuse 50 ist weiter ein mit einem Elektromotor 60 versehener Drehantrieb angebracht, mittels dem die Umlaufmutter 52 zur Drehung um ihre Drehachse herum antreibbar ist. Wenn sich die Umlaufmutter 52 um ihre Drehachse herum dreht, wird dadurch aufgrund des durch die Umlaufmutter 52 und die Steuerstange 40 gebildeten Spindel-Mutter-Triebs das Getriebegehäuse 50 bezüglich der Steuerstange 40 in Stangenlängsrichtung verschoben. Durch Drehung der Umlaufmutter 52 kann somit die durch die Lenkspindel 20 und das Lenkgetriebe 30 bewirkten Verschiebebewegung der Steuerstange 40 eine durch den Elektromotor 60 und den aus der Umlaufmutter 52 und die Steuerstange 40 gebildeten Spindel-Mutter-Trieb bewirkten Relativverschiebebewegung zwischen dem Getriebegehäuse 50 und der Steuerstange 40 überlagert werden.

Das Getriebegehäuse 50 ist fest mit einer Spurstange 70 verbunden, welche parallel zur Steuerstange 40 und von dieser quer zur Längsrichtung der Steuerstange 40 (und somit auch quer zur Längsrichtung der Spurstange 70) in einem Abstand versetzt angeordnet ist. Aufgrund der festen Verbindung mit dem Getriebegehäuse 50 wird die Spurstange 70 zusammen mit dem Getriebegehäuse 50 längs zur Spurstange 70 (und somit auch längs zur Arbeitsstange 40) bezüglich dem Fahrzeug 99 verschoben, wenn das Getriebegehäuse 50 aufgrund von durch die Lenkspindel 20 und/oder den Elektromotor 60 initiierten Lenkbewegungen bezüglich dem Fahrzeug 99 verschoben wird. Die Verschiebebewegungen der Spurstange 70 werden über eine weitere Partie des Lenkgestänges (nicht dargestellt) an zwei lenkbare Fahrzeugräder (nicht dargestellt) übertragen, um diese zu lenken.

Der Elektromotor 60 wird über eine Steuerungsvorrichtung (nicht dargestellt) gesteuert und mit Strom versorgt. Die Steuerungsvorrichtung empfängt Messsignale von einem an der Lenkspindel 20 angeordneten Lenkspindelsensor 25, der die Auslenkung der Lenkspindel 20 aus ihrer Geradeausstellung und die über das Lenkrad 10 vom Fahrer ausgeübten Lenkmomente misst, eine Geschwindigkeitssensor (nicht dargestellt), der die Fahrgeschwindigkeit misst, und einem im Bereich der Spurstange 70 angeordneten Wegaufnehmer 90, der die Verschiebung der Spurstange 70 gegenüber dem Fahrzeug 99 misst. In Abhängigkeit dieser Messsignale regelt die Steuerungsvorrichtung den elektrischen Strom zum Elektromotor 60 sowie einen Servoantrieb 80, welcher Verschiebebewegungen der Spurstange 70 bezüglich dem Fahrzeug 99 nach Art eines Servoantriebs einer gebräuchlichen Servolenkung unterstützt.

Die Steuerungsvorrichtung steuert den Elektromotor 60 derart, dass der Elektromotor 60 blockiert ist, wenn sowohl die Fahrgeschwindigkeit zwischen einer Geschwindigkeit von 30 km/h und 130 km/h liegt als auch die Auslenkung des Lenkrads 10 aus seiner Geradeausstellung kleiner ist als 180 °. Weiter wird der Elektromotor 60 von der Steuerungsvorrichtung derart gesteuert, dass für Fahrgeschwindigkeiten unterhalb von 30 km/h das Übersetzungsverhältnis in der Geradeausstellung des Lenkrads 1:16 beträgt und mit zunehmender Auslenkung des Lenkrads 10 bis auf einen Wert von 1:8 bei maximaler Auslenkung des Lenkrads 10 ansteigt. Bei Fahrgeschwindigkeiten oberhalb von 130 km/h wird der Elektromotor 60 von der Steuerungsvorrichtung derart gesteuert, dass das Übersetzungsverhältnis in der Geradeausstellung von einem Wert 1:16 bei 130 km/h mit zunehmender Fahrgeschwindigkeit auf einen Wert von ungefähr 1:25 bei maximaler Fahrgeschwindigkeit abfällt.

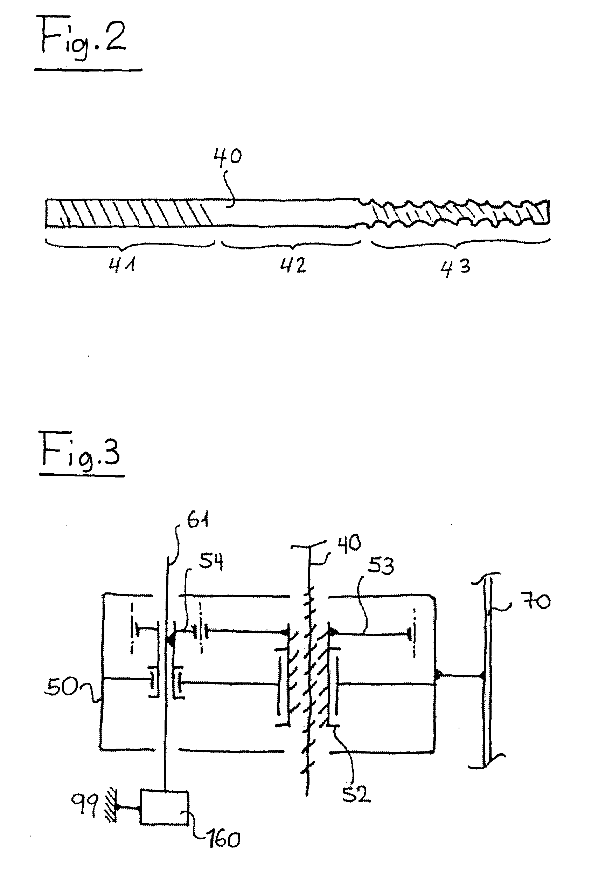

Die in Fig. 3 dargestellte Fahrzeuglenkung unterscheidet sich von der in Fig. 1 dargestellten Fahrzeuglenkung dadurch, dass der Elektromotor 160 des Drehantriebs für die Umlaufmutter 52 nicht am Getriebegehäuse 50, sondern am Fahrzeug 99 angeordnet ist. Der Elektromotor 160 dreht eine Antriebswelle 61 bezüglich dem Fahrzeug 99 zur Drehung um ihre Wellenachse herum an. Die Wellenachse der Antriebswelle 61 verläuft parallel zur Steuerstange 40 und zur Spurstange 70. Die Antriebswelle 61 ist durch das Zentrum eines Zahnrads 54 hindurch geführt, das um eine zur Wellenachse der Antriebswelle 61 koaxiale Drehachse herum drehbar und längs zu dieser Drehachse unverschiebbar im Getriebegehäuse 50 gelagert ist. Die Antriebswelle ist drehfest, aber in Wellenlängsrichtung bezüglich dem Zahnrad 54 verschiebbar mit dem Zahnrad 54 verbunden.

Das Zahnrad 54 kämmt mit einem weiteren Zahnrad 53, das fest mit der Umlaufmutter 52 verbunden und zusammen mit dieser um deren Drehachse herum drehbar ist. Insgesamt wird durch die Antriebswelle 61 sowie die beiden Zahnräder 53, 54 ein Drehantriebsgetriebe gebildet, über welches der Elektromotor 160 die Umlaufmutter 52 zur Drehung um ihre Drehachse herum antreiben kann, wobei das Gehäuse 50 des Überlagerungsgetriebes mitsamt der Umlaufmutter 52 und den Zahnrädern 53, 54 in Wellenlängsrichtung bezüglich dem Elektromotor verschiebbar ist.

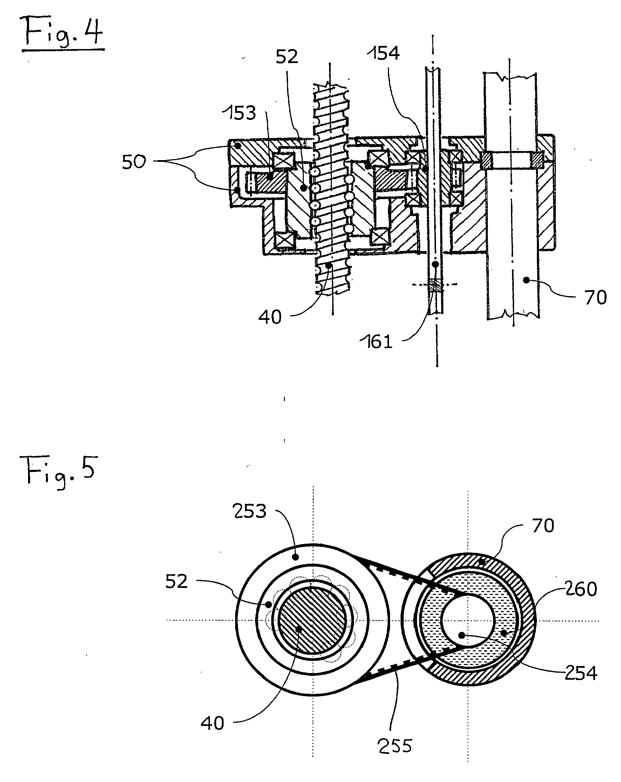

Die in Fig. 4 dargestellte Fahrzeuglenkung unterscheidet sich von der in Fig. 3 dargestellten Fahrzeuglenkung lediglich dadurch, dass die Antriebswelle 161 zwischen der Steuerstange 40 und der Spurstange 70 angeordnet ist, während bei der in Fig. 1 dargestellten Fahrzeuglenkung die Steuerstange 40 zwischen der Antriebswelle 61 und der Spurstange 70 angeordnet ist. Entsprechend ist bei der in Fig. 3 dargestellten Fahrzeuglenkung das mit der Antriebswelle 161 verbundene Zahnrad 154 zwischen dem mit der Umlaufmutter 52 verbundenen Zahnrad 153 und der Spurstange 70 angeordnet, während bei der in Fig. 1 dargestellten Fahrzeuglenkung das mit der Umlaufmutter 52 verbundene Zahnrad 53 zwischen dem mit der Antriebswelle 61 verbundenen Zahnrad 54 und der Spurstange 70 angeordnet ist.

Die in Fig. 5 dargestellte Fahrzeuglenkung unterscheidet sich von in den vorangehenden Figuren dargestellten Fahrzeuglenkungen dadurch, dass der Elektromotor 260 des Drehantriebs für die Umlaufmutter 52 in einem Hohlraum Spurstange 70 angeordnet ist. Der Elektromotor 260 dreht ein Zahnrad 254 bezüglich der Spurstange 70 zur Drehung um eine Drehachse herum an, die mit der Längsachse der Spurstange 70 zusammenfällt und somit parallel zur Drehachse der Umlaufmutter 52 ist.

Das Zahnrad 254 treibt über einen Zahnriemen 255 ein weiteres Zahnrad 253 an, das fest mit der Umlaufmutter 52 verbunden und zusammen mit dieser um deren Drehachse herum drehbar ist. Insgesamt wird durch den Zahnriemen 255 sowie die beiden Zahnräder 253, 254 ein Drehantriebsgetriebe gebildet, über welches der im Innern der Spurstange 70 angeordnete Elektromotor 260 die Umlaufmutter 52 zur Drehung um ihre Drehachse herum antreiben kann.

Zusammenfassend ist festzustellen, dass durch die Erfindung eine Fahrzeuglenkung mit einem variablen Übersetzungsverhältnis angegeben wird, die auf einem neuen Konzept beruht.

## Patentansprüche

1. Fahrzeuglenkung mit variablem Übersetzungsverhältnis für ein mit wenigstens einem lenkbaren Rad versehenes Fahrzeug (99), mit einem Lenkgestänge, das wenigstens eine Steuerstange (40) und eine Arbeitsstange (70) aufweist, sowie einem mit einem Stellantrieb versehenen Überlagerungsgetriebe, das zwischen der Steuerstange (40) und der Arbeitsstange (70) wirkt, wobei die Steuerstange (40) unter Einfluss einer Lenkspindel (20) und eines Lenkgetriebes (30) in Steuerstangenlängsrichtung verschiebbar ist, die Arbeitsstange (70) unter Einfluss der Verschiebebewegung der Steuerstange (40) und einer dieser Verschiebebewegung mittels des Überlagerungsgetriebes überlagerten, von dessen Stellantrieb initiierten Relativverschiebebewegung zwischen der Steuerstange (40) und der Arbeitsstange (70) in Arbeitsstangenlängsrichtung verschiebbar ist, und wobei die Verschiebebewegung der Arbeitsstange (70) über eine Partie des Lenkgestänges an das lenkbare Rad übertragen wird, um dieses zu lenken, **dadurch gekennzeichnet, dass** die Arbeitsstange (70) in einem Abstand quer zur Steuerstangenlängsrichtung von der Steuerstange (40) versetzt angeordnet ist.

2. Fahrzeuglenkung nach Anspruch 1, **dadurch gekennzeichnet, dass** das Überlagerungsgetriebe ein Basisteil (50) hat, das bezüglich einer ersten Stange (70) eines aus der Steuerstange (40) und der Arbeitsstange (70) gebildeten Stangenpaares in Längsrichtung der ersten Stange (70) unverschieblich mit der ersten Stange (70) verbunden ist, wobei zwischen dem Basisteil (50) und der zweiten Stange (40) des Stangenpaares mittels des Stellantriebs eine geradlinige Relativverschiebbewegung in Längsrichtung der zweiten Stange (40) erzeugbar ist.

3. Fahrzeuglenkung nach Anspruch 2, **dadurch gekennzeichnet, dass** der Stellantrieb einen Spindel-Mutter-Trieb (40, 52) aufweist mit einer länglichen Gewindespindel (40), die eine Spindelachse definiert, und einer mit der Gewindespindel (40) zusammenwirkenden Mutter (52), die bezüglich dem Basisteil (50) um eine mit der Spindelachse zusammenfallenden Drehachse herum drehbar und in Richtung der Spindelachse bezüglich dem Basisteil (50) unverschiebbar am Basisteil (50) gelagert ist, wobei die Mutter (52) von einem Drehantrieb zur Drehung um die Drehachse herum antreibbar ist.

4. Fahrzeuglenkung nach Anspruch 3, **dadurch gekennzeichnet, dass** der Drehantrieb einen von der Mutter (52) distanzierten Antriebsmotor (60, 160, 260) umfasst und über ein Drehantriebsgetriebe mit der Mutter (52) gekoppelt ist, um diese zur Drehung um die Drehachse herum anzutreiben.

5. Fahrzeuglenkung nach Anspruch 3 oder 4, **dadurch gekennzeichnet, dass** das Lenkgetriebe (30) weiter mit einer Zahnstange (40) versehen ist, wobei die Gewindespindel (40) fest mit der Zahnstange (40) verbunden ist.

6. Fahrzeuglenkung nach einem der Ansprüche 4 oder 5, **dadurch gekennzeichnet, dass** die erste Stange (70) die Arbeitsstange (70) ist und dass der Antriebsmotor (260) ein Elektromotor (260) ist, der an der Arbeitsstange (70) oder in einem Hohlraum der Arbeitsstange (70) angeordnet ist.

7. Fahrzeuglenkung insbesondere nach einem der Ansprüche 1 bis 6 für ein mit wenigstens einem lenkbaren Rad versehenes Fahrzeug, mit einer Lenkhandhabe (10), welche mit dem lenkbaren Rad gekoppelt ist, um dieses zu lenken, wobei zwischen einem Drehwinkel der Lenkhandhabe und einem Schwenkwinkel des lenkbaren Rads ein Übersetzungsverhältnis vorliegt, welches entsprechend einem Kennfeld zumindest in Abhängigkeit von der Auslenkung der Lenkhandhabe aus einer Geradeausstellung und von der Fahrgeschwindigkeit veränderbar ist, **dadurch gekennzeichnet, dass** das Übersetzungsverhältnis im Wesentlichen konstant ist, wenn sowohl die Fahrgeschwindigkeit zwischen einer unteren Grenzgeschwindigkeit und einer oberen Grenzgeschwindigkeit liegt als auch die Auslenkung der Lenkhandhabe (10) aus der Geradeausstellung kleiner ist als ein Grenzauslenkungswinkel.

8. Fahrzeuglenkung nach Anspruch 7, **dadurch gekennzeichnet, dass** sie ein mit einem Stellantrieb versehenes Überlagerungsgetriebe aufweist, das zwischen einer Steuerkomponente (40) und einer Arbeitskomponente (70) der Lenkung wirkt, wobei die Steuerkomponente (40) unter Einfluss der Lenkhandhabe (10) bewegbar ist, die Arbeitskomponente (70) unter Einfluss der Bewegung der Steuerkomponente (40) und einer dieser Bewegung mittels des Überlagerungsgetriebes überlagerten, von dessen Stellantrieb initiierten Relativbewegung zwischen der Steuerkomponente (40) und der Arbeitskomponente (70) bewegbar ist, und wobei die Bewegung der Arbeitskomponente (70) an das lenkbare Rad übertragen wird, um dieses zu lenken, und wobei im Falle, dass sowohl die Fahrgeschwindigkeit zwischen der unteren Grenzgeschwindigkeit und der oberen Grenzgeschwindigkeit liegt als auch die Auslenkung der Lenkhandhabe (10) aus der Geradeausstellung kleiner ist als der Grenzauslenkungswinkel, der Stellantrieb blockiert ist.

9. Fahrzeuglenkung nach Anspruch 7 oder 8, **dadurch gekennzeichnet, dass** für Fahrgeschwindigkeiten, die kleiner sind als die untere Grenzgeschwindigkeit die Variabilität des Übersetzungsverhältnisses in Abhängigkeit der Auslenkung grösser ist als für Fahrgeschwindigkeiten, die grösser sind als die untere Grenzgeschwindigkeit.

10. Fahrzeuglenkung nach einem der Ansprüche 7 bis 9, **dadurch gekennzeichnet, dass** für Fahrgeschwindigkeiten, die grösser sind als die obere Grenzgeschwindigkeit die Variabilität des Übersetzungsverhältnisses in Abhängigkeit der Fahrgeschwindigkeit grösser ist als für Fahrgeschwindigkeiten, die kleiner sind als die obere Grenzgeschwindigkeit.
